Europäisches Patentamt

European Patent Office

Office européen des brevets

(19)

(11) **EP 1 593 955 A2**

(12) **EUROPEAN PATENT APPLICATION**

(43) Date of publication:
**09.11.2005 Bulletin 2005/45**

(51) Int Cl.$^7$: **G01N 21/55**

(21) Application number: **05252740.5**

(22) Date of filing: **03.05.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **03.05.2004 US 838790**

(71) Applicant: **Agilent Technologies, Inc.**
**Palo Alto, CA 94306 (US)**

(72) Inventors:
• **Vanwiggeren, Gregory D.**
**San Jose CA 95129 (US)**
• **Roitman, Daniel B.**
**Menlo Park CA 94025 (US)**

(74) Representative: **Tollett, Ian**
**Williams Powell**
**Morley House**
**26-30 Holborn Viaduct**
**London EC1A 2BP (GB)**

(54) **Wavelength-tuned intensity measurement with a surface plasmon resonance sensor**

(57)     An incident signal illuminates an SPR sensor (10) over a wavelength range. Intensity of a reflected signal from the SPR sensor is detected with wavelength discrimination imposed on the incident signal or the reflected signal. The wavelength discrimination is imposed at a predesignated tuning rate within the wavelength range. The detected intensity is then sampled at a sampling rate and an intensity profile associated with the SPR sensor is established from the sampling with a wavelength resolution determined by the tuning rate and the sampling rate.

Figure 4

EP 1 593 955 A2

**Description**

The present invention relates in general to an optical system and to a related method, and in particular to an optical system comprising an SPR sensor.

Surface Plasmon Resonance (SPR) relates to optical excitation of surface plasmon waves along an interface between a conductive film and an adjacent dielectric. At resonance, energy from an incident optical signal is coupled to a surface plasmon wave, resulting in a decrease, or dip, in the intensity of an optical signal that is reflected at the conductive film. The optical wavelength at which the dip occurs, referred to as the resonant wavelength, is sensitive to changes in the refractive index of the dielectric that is adjacent to the conductive film. This sensitivity to changes in refractive index enables the dielectric to be used as a sensing medium, for example to detect and identify biological analytes, or for biophysical analysis of biomolecular interactions. There is a need for measurement schemes that increase the accuracy with which changes in refractive index can be detected. In addition, there is a need for measurement schemes that are scalable for use with analytical systems that include arrays of samples for biochemical sensing.

According to the embodiments of the present invention, an incident signal illuminates an SPR sensor over a wavelength range. Intensity of a reflected signal from the SPR sensor is detected with wavelength discrimination imposed on the incident signal or the reflected signal. The wavelength discrimination is imposed at a predesignated tuning rate within the wavelength range. The detected intensity is then sampled at a sampling rate and an intensity profile associated with the SPR sensor is established from the sampling with a wavelength resolution determined by the tuning rate and the sampling rate.

A number of preferred embodiments of the present invention will now be described with reference to the drawings, in which:-

Figure 1 shows an SPR sensor.
Figure 2 shows exemplary intensity profiles of reflected optical signals associated with an SPR sensor.
Figure 3 shows sensitivity, versus wavelength, of resonant wavelength to refractive index.
Figure 4 shows exemplary intensity profiles of reflected optical signals associated with an SPR sensor.
Figures 5-6 show optical systems according to embodiments of the present invention.
Figures 7A-7B show optical systems according to alternative embodiments of the present invention.
Figure 8 shows a flow diagram of a measurement method according to alternative embodiments of the present invention.

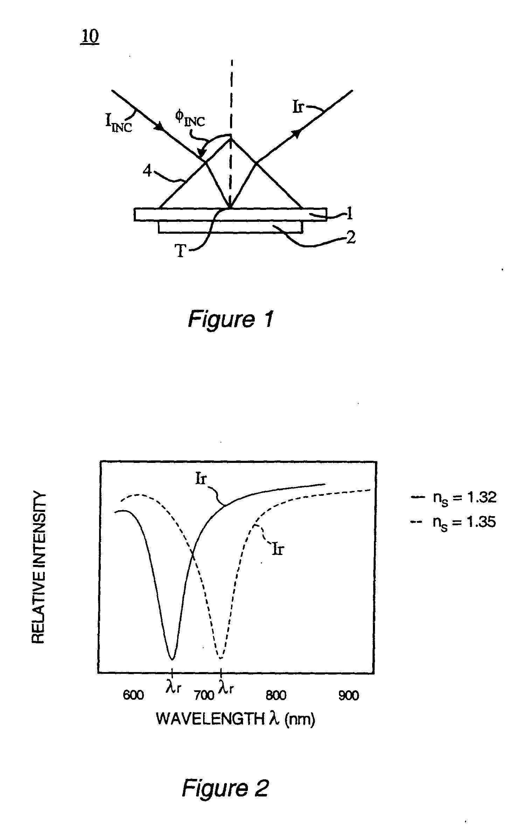

Figure 1 shows an SPR sensor 10 that includes a conductive film 1 adjacent to a dielectric 2. In some SPR sensors 10 the dielectric 2 is a sensing medium, and a linker layer (not shown) is interposed between the conductive film 1 and the dielectric 2 to provide a site for bio-molecular receptors to attach. For clarity, the conductive film 1 in Figure 1 is shown adjacent to the dielectric 2 without the linker layer. A prism 4 is positioned adjacent to a side of the conductive film 1 that is opposite the dielectric 2. Features of the SPR sensor 10 are described in a variety of references, including *Simulation and Analysis of Surface Plasmon Resonance Biosensor Based on Phase Detection*, Sensors and Actuators B vol. 91, Xinglong Yu et al. (2003), p285-290.

In a typical SPR sensor 10, the conductive film 1 is a gold layer having an appropriate thickness for an incident optical signal, hereafter signal $I_{INC}$, at a designated angle of incidence $\phi_{INC}$ and wavelength, to excite a surface plasmon wave, or surface plasmon, along the conductive film 1. Associated with the surface plasmon is an evanescent tail (not shown) that penetrates into the dielectric 2. Energy in the signal $I_{INC}$ that is not coupled into the surface plasmon is reflected at the conductive film 1 to provide a reflected optical signal, hereafter signal Ir.

Coupling between the signal $I_{INC}$ and the surface plasmon results in a decrease, or dip, in the intensity of the signal Ir. The optical wavelength at which the dip occurs, referred to as the resonant wavelength $\lambda_R$, is indicated in Figure 2 which shows exemplary intensity profiles. These intensity profiles show the relative intensity of the signal Ir versus the wavelength $\lambda$ of the signals $I_{INC}$, Ir and indicate that the intensity of the signal Ir is sensitive to the wavelength $\lambda$ of the signals $I_{INC}$, Ir in the vicinity of the resonant wavelength $\lambda_R$. The resonant wavelength $\lambda_R$, in turn, is sensitive to changes $\Delta n$ in refractive index $n_S$ of the dielectric 2, due to the penetration of the evanescent tail into the dielectric 2. Establishing the intensity profile of the signal Ir enables the resonant wavelength $\lambda_R$ to be identified, and enables shifts $\Delta\lambda$ in the resonant wavelength $\lambda_R$ to be detected. Detected shifts $\Delta\lambda$ in the resonant wavelength $\lambda_R$ can be mapped to changes $\Delta n$ in refractive index $n_S$ of the dielectric 2 that cause the shifts $\Delta\lambda$ in the resonant wavelength $\lambda_R$. In the exemplary intensity profiles of Figure 2, at a designated angle of incidence $\phi_{INC}$, a detected shift $\Delta\lambda$ of 60 nm in the resonant wavelengths $\lambda_R$ results from a change $\Delta n$ in the refractive index $n_S$ of the dielectric 2 from 1.32 to 1.35 refractive index units.

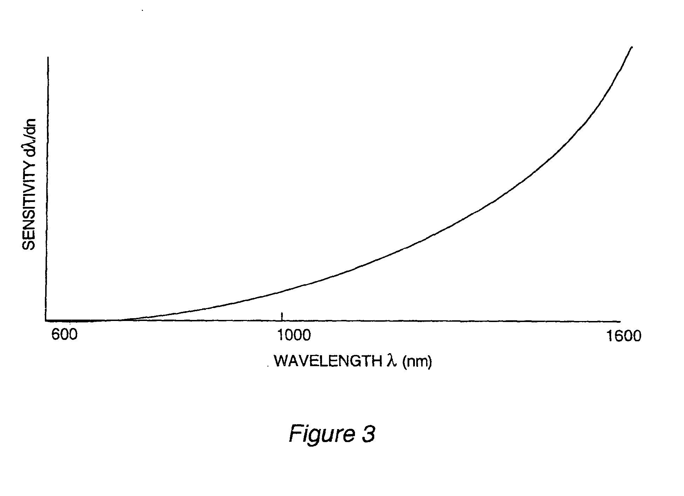

Figure 3 shows that at longer optical wavelengths, the resonant wavelength $\lambda_R$ has higher sensitivity to changes $\Delta n$ in the refractive index $n_S$ of the dielectric 2. Thus, as the wavelength $\lambda$ of the signals $I_{INC}$, Ir increase, the sensitivity of resonant wavelength $\lambda_R$ to refractive index $n_S$ (indicated by the derivative $d\lambda/dn$) correspondingly increases, which results in a larger shift $\Delta\lambda$ in resonant wavelength $\lambda_R$ for each given change $\Delta n$

in refractive index $n_S$.

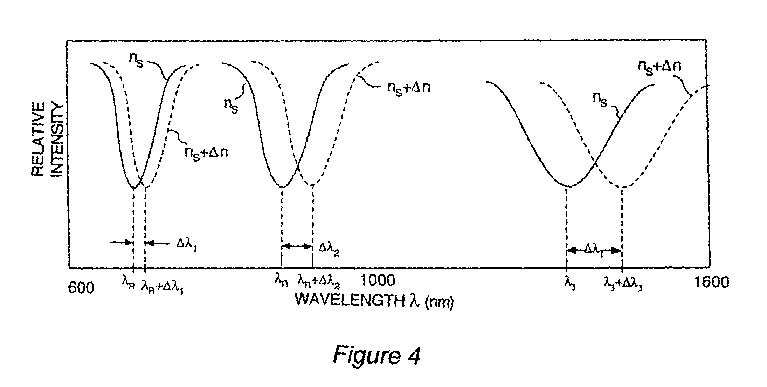

Figure 4 shows exemplary intensity profiles that indicate the relative intensity of the signal Ir versus the optical wavelength $\lambda$ of the signals $I_{INC}$, Ir at designated angles of incidence of signals $\phi_{INC}$ of the signal $I_{INC}$. At longer wavelengths, larger shifts $\Delta\lambda$ in resonant wavelength $\lambda_R$ result for a given change $\Delta n$ in refractive index $n_S$. In the example shown in Figure 4, for a given change $\Delta n$ in refractive index $n_S$, shifts $\Delta\lambda$ in resonant wavelength $\lambda_R$ get progressively larger, from a shift $\Delta\lambda_1$ to a shift $\Delta\lambda_3$, as wavelength $\lambda$ of the signals $I_{INC}$, Ir increases. Figure 4 also indicates that while the sensitivity $d\lambda/dn$ increases at longer wavelength $\lambda$, the dips in relative intensity become broader and less pronounced at the longer wavelengths, which makes it more difficult to accurately detect the resonant wavelength $\lambda_R$ of the SPR sensor 10 using conventional techniques. *Surface Plasmon Resonance Biosensors,* by Homola et al., in Optical Biosensors: Present and Future, edited by F. S. Ligler and C. A. Rowe Taitt, ISBN 0444509747, page 244, reports that narrow dips in intensity provide higher accuracy and resolution for SPR-based sensors.

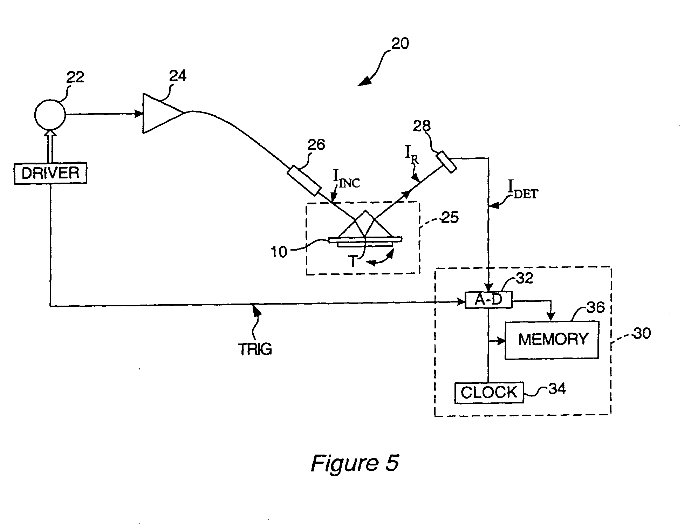

Figure 5 shows an optical system 20 according to embodiments of the present invention. The optical system 20 is suitable for establishing intensity profiles associated with the SPR sensor 10, for detecting the resonant wavelength $\lambda_R$ of an SPR sensor 10, or for detecting shifts $\Delta\lambda$ in resonant wavelength $\lambda_R$, such as shifts $\Delta\lambda$ induced by changes $\Delta n$ in refractive index $n_S$ of the dielectric 2 in an SPR sensor 10. In a typical application of the optical system 20, shifts $\Delta\lambda$ in the resonant wavelength $\lambda_R$ are detected and mapped to the changes $\Delta n$ in refractive index $n_S$ of the dielectric 2 that induce the shifts $\Delta\lambda$.

The optical system 20 includes a tunable optical source 22, typically a tunable laser such as an AGILENT TECHNOLOGIES, INC. model 81680B, that can be tuned at a tuning rate $\gamma$ within a wavelength range $\lambda_1$ - $\lambda_2$. The wavelength range $\lambda_1$ - $\lambda_2$ in this example spans from at least 1492-1640 nanometers. Spectral bandwidth of the signal $I_{INC}$ provided by the tunable optical source 22 in the optical system is typically less than 100kHz, which is typically narrower than the shifts $\Delta\lambda$ in the resonant wavelength $\lambda_R$ detected or measured by the optical system 20. The tunable optical source 22 is alternatively implemented with a tunable optical filter (not shown) cascaded with a white light or other broadband optical source (not shown) to provide a signal $I_{INC}$ that is spectrally narrow and tunable over the wavelength range $\lambda_1$ - $\lambda_2$. Examples of tunable optical filters suitable for use in this type of tunable optical source 22 are available from MICRON OPTICS, Inc., Atlanta, GA., USA.

An erbium-doped fiber amplifier (EDFA), or other type of optical amplifier 24, is optionally cascaded with the tunable optical source 22 to increase the power of the signal $I_{INC}$ that illuminates a region, or target T, of the SPR sensor 10. A collimator 26, or other beam-conditioning element, coupled to the tunable optical source 22 directs the signal $I_{INC}$ to the target T. Typically, the signal $I_{INC}$ includes a p-polarized lightwave and an s polarized lightwave that is orthogonal to the p polarized lightwave, where p, s refer to the conventionally defined polarizations p, s. The signal $I_{INC}$ can also be designated to be p polarized by including a polarization controller (not shown) in the signal path between the tunable optical source 22 and the collimator 26. At a designated angle of incidence $\phi_{INC}$, the signal $I_{INC}$ couples to the surface plasmon and causes the signal Ir to undergo the dip in intensity at the resonant wavelength $\lambda_R$, shown for example in the intensity profiles of Figure 2 and Figure 4. While the optical system 20 is shown implemented using optical fiber in the optical path between the tunable optical source 22 and the collimator 26, free-space optics are alternatively used in this optical path to illuminate the target T of the SPR sensor 10. In these embodiments, spatially separated quarter-wave plates and half-wave plates interposed between the tunable optical source 22 and the target T can be used to provide polarization adjustment to achieve a p polarized signal $I_{INC}$. Polarization adjustment is alternatively provided via a polarization controller (not shown) interposed in the fiber optic signal path at the output of the tunable optical source 22.

A detector 28 intercepts the signal $I_R$ as the wavelength $\lambda$ of the tunable optical source 22 is tuned within a wavelength range $\lambda_1$ - $\lambda_2$ that includes the resonant wavelength $\lambda_R$ of the SPR sensor 10. When the resonant wavelength $\lambda_R$ occurs outside the wavelength range $\lambda_1$ - $\lambda_2$, the angle of incidence $\phi_{INC}$ can be adjusted so that at an adjusted angle of incidence, the resonant wavelength $\lambda_R$ falls within the wavelength range $\lambda_1$ - $\lambda_2$. Adjusting the angle of incidence $\phi_{INC}$ is typically enabled by mounting the SPR sensor 10 on a rotation stage 25.

The detector 28 is typically a photodiode, photosensor or other transducer suitable for converting an intercepted optical signal into a corresponding electrical signal, hereinafter referred to as detected signal $I_{DET}$. The detected signal $I_{DET}$ is provided to a processing unit 30 that in this example includes an analog to digital converter 32 that acquires samples of the detected signal $I_{DET}$. This acquisition of the samples is triggered by a trigger signal TRIG provided by the tunable optical source 22, which indicates initiation of the tuning or sweeping of the tunable optical source 22. The rate of the sample acquisitions, or sample rate, is determined by a clock rate $f_{CLOCK}$ established by a clock 34. The acquisitions result in a set **S** of samples of the detected signal $I_{DET}$ that is stored in a memory 36. Samples Si in the set **S** represent the detected intensity of the signal Ir at the wavelengths $\lambda i$ of the tunable optical source 22. Each integer sample number $i$ corresponds to a wavelength $\lambda i$ within the wavelength range $\lambda_1$ - $\lambda_2$. For example, the wavelength $\lambda i$ of the sample number i of the sample Si in the set S of samples is determined by the

relationship $\lambda i = \lambda_1 + (\gamma/f_{CLOCK})i$.

Although the detector 28 is typically a broadband detector, to accommodate the wavelength range $\lambda_1 - \lambda_2$ of the tunable optical source, the signal Ir intercepted by the detector is spectrally narrow at the wavelengths of the samples Si, so that wavelength resolution of the acquired samples Si in the set S is not compromised by the spectral width of the signal Ir. With the wavelength $\lambda$ of the tunable optical source 22 being swept or tuned at the tuning rate $\gamma$, the wavelength resolution with which the samples Si in the set S are acquired is based on the ratio of the clock rate $f_{CLOCK}$ and the tuning rate $\gamma$. Increasing the clock rate $f_{CLOCK}$ relative to the tuning rate $\gamma$ increases the wavelength resolution, enabling the intensity of the signal Ir to be accurately represented in an intensity profile as a function of wavelength $\lambda$. Curve fitting, averaging or applying other signal processing techniques to the acquired set S of samples enables an accurate representation of an intensity profile associated with the SPR sensor 10. These signal processing techniques are readily performed via a computer or other type of processor (not shown) coupled to the memory 36.

The intensity profile enables an accurate determination of the resonant wavelength $\lambda_R$ of the SPR sensor 10, which can be used to accurately determine the resonant wavelength $\lambda_R$ of the SPR sensor 10, or shifts $\Delta\lambda$ in the resonant wavelength $\lambda_R$, such as those shifts $\Delta\lambda$ induced by changes $\Delta n$ in the refractive index $n_S$ of the dielectric 2 of the SPR sensor 10. For example, resonant wavelength $\lambda_R$ can be determined from derivatives of the intensity profile to find the minimum of the intensity profile that corresponds to the resonant wavelength $\lambda_R$, or from any other suitable technique for identifying the resonant wavelength $\lambda_R$ at the dip in the intensity profile. Shifts $\Delta\lambda$ in the resonant wavelength $\lambda_R$ between two or more intensity profiles can be detected and quantified by determining the difference in resonant wavelengths $\lambda_R$ of the two or more intensity profiles. Shifts in the intensity profile can also be associated with a change in one or more attributes of the SPR sensor such as a change in refractive index in a sensing medium of the SPR sensor 10.

The detected shifts $\Delta\lambda$ in the resonant wavelength $\lambda_R$ detected from the samples of the detected signal $I_{DET}$ can then be mapped to changes $\Delta n$ in refractive index $n_S$ of the dielectric 2 that induce the shifts $\Delta\lambda$ in the resonant wavelength $\lambda_R$. In one example, mapping between the shifts $\Delta\lambda$ and the changes $\Delta n$ is established from computer simulation of the SPR sensor 10 using MATLAB or other suitable program or environment that solves the Fresnel reflections at the interface between the conductive film 1 and the dielectric 2. The computer simulation models the sensitivity $d\lambda/dn_S$ of the resonant wavelength $\lambda_R$ to refractive index $n_S$. From the sensitivity $d\lambda/dn_S$, each shift $\Delta\lambda$ in resonant wavelength $\lambda_R$ can be mapped to a corresponding change $\Delta n$ in refractive index $n_S$. In another example, multiple targets T having dielectrics 2 with different known refractive indices $n_{S1}$, $n_{S2}...n_{SX}$ are illuminated sequentially or simultaneously by optical signals $I_{INC1}$, $I_{INC2}...I_{INC3}$ at wavelengths $\lambda$ in the vicinity of the resonant wavelength $\lambda_R$. From detection and sampling of reflected optical signals $Ir_1$, $Ir_2...Ir_X$ by the detector and processing unit of the optical system, resonant wavelengths $\lambda_{R1}$, $\lambda_{R2}...\lambda_{RX}$ corresponding to each of the refractive indices $n_{S1}$, $n_{S2}...n_{SX}$ are determined. Curve-fitting of the resonant wavelengths $\lambda_{R1}$, $\lambda_{R2}...\lambda_{RX}$ to refractive indices $n_{S1}$, $n_{S2}...n_{SX}$, interpolation, or other suitable techniques are then used to establish a mapping between shifts $\Delta\lambda$ in resonant wavelength $\lambda_R$ and changes $\Delta n$ in refractive index $n_S$.

The mapping between shifts $\Delta\lambda$ in resonant wavelength $\lambda_R$ and changes $\Delta n$ in refractive index $n_S$ can also be established by matching appropriate wave vectors at the interface between the conductive film 1 and the dielectric 2. This includes equating the wave vector $k_{SPR} = w/c~((\varepsilon_1 n_S^2)(\varepsilon_1 + n_S^2))^{1/2}$ of the surface plasmon to the wave vector $kx = n_4 (2\pi/\lambda)\sin\phi_{INC}$ of the optical signal $I_{INC}$, where $\varepsilon_1$ is the dielectric constant of the conductive film 1, where $n_4$ is the refractive index of the prism 4, and where $\phi_{INC}$ is the angle of incidence of the optical signal $I_{INC}$. The change $\Delta n$ in refractive index $n_S$ can be derived from the equation of the wave vectors $k_{SPR}$, $kx$, as equation (1), where the imaginary component of the dielectric constant $\varepsilon_1$ of the conductive film 1 is set to zero.

$$\Delta n = \frac{\Delta\lambda(\dfrac{n_4 n_S^3}{\lambda}(\dfrac{1}{\varepsilon_1}-1)+\dfrac{dn_4}{d\lambda}n_S(n_S^2+\varepsilon_1))}{n_4\varepsilon_1} \qquad (1)$$

The alternatives presented for mapping detected shifts in the resonant wavelength to changes $\Delta n$ in refractive index $n_S$ are exemplary. It is appreciated that any suitable scheme is alternatively used to establish this mapping.

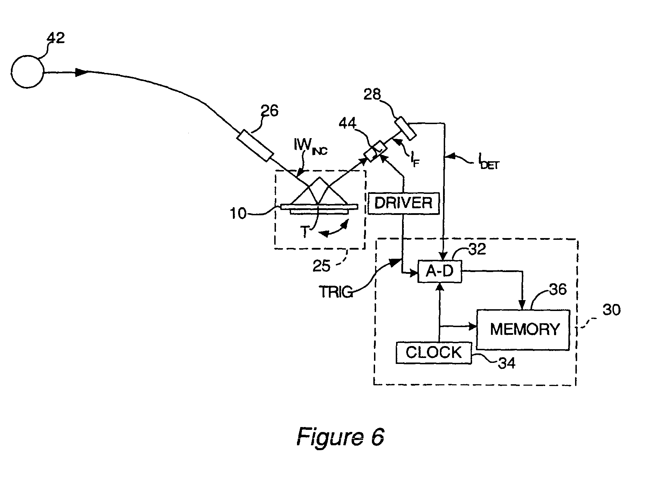

According to an alternative embodiment of the present invention shown in Figure 6, a white light or other spectrally broad optical source 42 within an optical system provides a signal $IW_{INC}$ that illuminates the SPR sensor 10. A signal IWr is reflected at the target T of the SPR sensor 10 and then filtered by a tunable optical filter 44 interposed between the SPR sensor 10 and the detector 28. The tunable optical filter 44, such as a diffraction grating or filters available from OMEGA OPTICAL, Inc., Brattleboro, VT., USA, has a spectrally narrow passband and is tunable within the wavelength range $\lambda_1 - \lambda_2$.

In one embodiment, the detector 28 intercepts a resulting filtered signal $I_F$ from the tunable optical filter 44 as the passband of the tunable optical filter 44 is tuned within a wavelength range $\lambda_1 - \lambda_2$ that includes the resonant wavelength $\lambda_R$ of the SPR sensor 10. When the resonant wavelength $\lambda_R$ occurs outside the wavelength range $\lambda_1 - \lambda_2$, the angle of incidence $\phi_{INC}$ of

the signal $IW_{INC}$ can be adjusted via the rotational stage 25 so that at an adjusted angle of incidence, the resonant wavelength $\lambda_R$ falls within the wavelength range $\lambda_1 - \lambda_2$. In response to the intercepting the filtered signal $I_F$, the detector 28 produces the signal $I_{DET}$. The detected signal $I_{DET}$ is then provided to the processing unit 30, which acquires the set S of samples. As with the embodiment shown in Figure 5, the set S of samples is processed to establish an intensity profile associated with the SPR sensor 10 to detect the resonant wavelength $\lambda_R$ of the SPR sensor 10, or to detect shifts $\Delta\lambda$ in the resonant wavelength $\lambda_R$ of the SPR sensor 10 resulting from changes $\Delta n$ in refractive index $n_S$. The shifts $\Delta\lambda$ in the resonant wavelength $\lambda_R$ can then be mapped to changes $\Delta n$ in refractive index $n_S$.

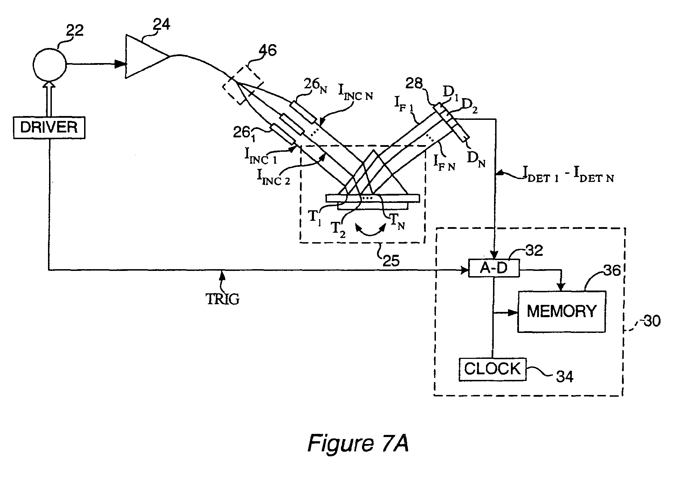

Alternative embodiments of the present invention, shown in Figures 7A-7B, enable simultaneous or sequential detection of induced shifts $\Delta\lambda$ in resonant wavelength $\lambda_R$ from an array of targets $T_1$-$T_N$ included in one or more SPR sensors 10. In Figure 7A, the targets $T_1$-$T_N$ are illuminated by optical signals $I_{INC1}$-$I_{INCN}$ provided from an optical signal $I_{INC}$ by an optical splitter 46 and directed via collimators $26_1$-$26_N$. An imaging element, such as a lens (not shown) is optionally interposed between the array of targets $T_1$-$T_N$ and an array of detector elements $D_1$-$D_N$ in the detector 28, such as a photodiode array. When included, the imaging element provides a mapping or other correspondence between the physical locations of the targets $T_1$-$T_N$ and physical locations of detector elements $D_1$-$D_N$ in the detector array, so that optical signals $Ir_1$-$Ir_N$ reflected from the array of targets $T_1$-$T_N$ are intercepted by corresponding detector elements $D_1$-$D_N$ in the detector array to provide detected signals $I_{DET1}$-$I_{DETN}$. When the beams of the optical signals $Ir_1$-$Ir_N$ reflected from the array of targets $T_1$-$T_N$ are spatially distinct, a correspondence between the array of targets $T_1$-$T_N$ and the array of detector elements $D_1$-$D_N$ is provided via the optical signals $Ir_1$-$Ir_N$. When the beams of the optical signals $Ir_1$-$Ir_N$ reflected from the array of targets $T_1$-$T_N$ overlap and are not spatially distinct, a physical mapping or other correspondence between the array of targets $T_1$-$T_N$ and the array of detector elements $D_1$-$D_N$ can be provided by interposing the imaging element between the array of targets $T_1$-$T_N$ and the array of detector elements $D_1$-$D_N$.

The detected signals $I_{DET1}$-$I_{DETN}$ from the array of detector elements $D_1$-$D_N$ are then provided to the processing unit 30, which acquires sets **$S_1$-$S_N$** of samples that correspond to each of the targets $T_1$-$T_N$. As with the embodiment shown in Figure 5, the sets **$S_1$-$S_N$** of samples are processed to determine the resonant wavelengths $\lambda_R$, or shifts $\Delta\lambda$ in the resonant wavelengths $\lambda_R$ of the targets $T_1$-$T_N$ resulting from changes in refractive indices of the targets $T_1$-$T_N$. The shifts $\Delta\lambda$ in the resonant wavelength $\lambda_R$ can then be mapped to changes $\Delta n$ in refractive index $n_S$.

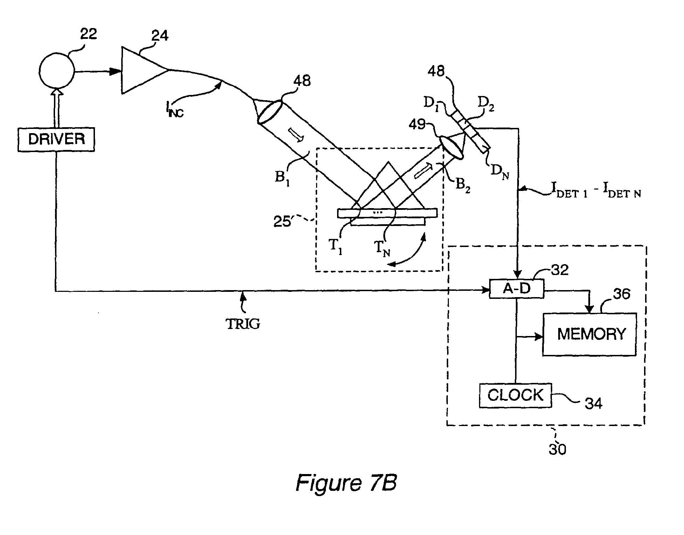

According to the embodiment of the present invention shown in Figure 7B, a collimating element 48, such as a lens forms a beam B1 from the optical signal $I_{INC}$ that is suitably wide to illuminate an array of targets $T_1$-$T_N$. In the example shown, spatially separated quarter-wave plates and half-wave plates (not shown) can be interposed between the tunable optical source and the array of targets $T_1$-$T_N$ to provide polarization adjustment to achieve a p polarization of the beam B1. Polarization adjustment is alternatively provided via a polarization controller (not shown) interposed in the fiber optic signal path at the output of the tunable optical source 22. At the array of targets $T_1$-$T_N$ a beam B2 is reflected. An imaging element 49, positioned in the optical path between the array of targets $T_1$-$T_N$ and the detector 28, provides a correspondence between the physical locations of the targets $T_1$-$T_N$ and physical locations of detector elements $D_1$-$D_N$ in the detector 28, so that portions of the beam B2 reflected from the corresponding targets positioned within the array of targets $T_1$-$T_N$ are intercepted by corresponding detector elements $D_1$-$D_N$ in the detector 28 to provide detected signals $I_{DETI}$-$I_{DETN}$. As with the embodiment shown in Figure 7A, the sets **$S_1$-$S_N$** of samples are processed to determine the resonant wavelengths $\lambda_R$, or shifts $\Delta\lambda$ in the resonant wavelengths $\lambda_R$ of the targets $T_1$-$T_N$ resulting from changes $\Delta n_1$-$\Delta n_N$ in refractive indices of the targets $T_1$-$T_N$. The shifts $\Delta\lambda$ in the resonant wavelength $\lambda_R$ can then be mapped to changes $\Delta n$ in refractive index $n_S$.

In the examples presented, shifts $\Delta\lambda$ in resonant wavelength $\lambda_R$ have been mapped to changes $\Delta n$ in refractive index $n_S$ of the dielectric 2. These changes $\Delta n$ in refractive index $n_S$ can then be used to detect and identify biological analytes, or for biophysical analysis of biomolecular interactions. However, according to alternative embodiments of the present invention, the shifts $\Delta\lambda$ in the resonant wavelength $\lambda_R$ are mapped to the presence or identity of biological analytes, to biophysical analyses of biomolecular interactions, or to any suitable attributes or features of the SPR sensor 10 that induce the shifts $\Delta\lambda$ in the resonant wavelength $\lambda_R$.

Conventional SPR sensing techniques provide for detection of small and medium size analytes, with large analytes being difficult to detect. *Surface Plasmon Resonance Biosensors*, by Homola et al., page 243, reports that the sensitivity of conventional sensor techniques is not adequate for detecting larger analytes, such as bacteria and cells. However, the embodiments of the present invention accommodate longer wavelengths $\lambda$ within the wavelength range $\lambda_1 - \lambda_2$ over which the signal $I_{INC}$ illuminates the SPR sensor 10. These longer wavelengths provide correspondingly deeper penetration of the evanescent field into the dielectric 2 of the SPR sensor 10, which enables larger analytes to be detected, identified, monitored, or otherwise measured using the optical systems and methods according to the embodiments of the present invention.

According to the embodiments of the present invention, the resonant wavelength associated with the SPR sensor 10 is typically the wavelength at which the dip in the intensity profile occurs, as shown for example in Figures 2 and 4. However, the resonant wavelength $\lambda_R$ associated with the SPR sensor 10 is alternatively any other designated measurement wavelength, such as one or more wavelengths $\lambda$ offset from the actual resonant wavelength at which the dip in the intensity profile occurs. These measurement wavelengths can be used to detect shifts $\Delta\lambda$ in the resonant wavelength $\lambda_R$, such as those shifts $\Delta\lambda$ due to changes in the refractive index $n_S$ of the dielectric 2.

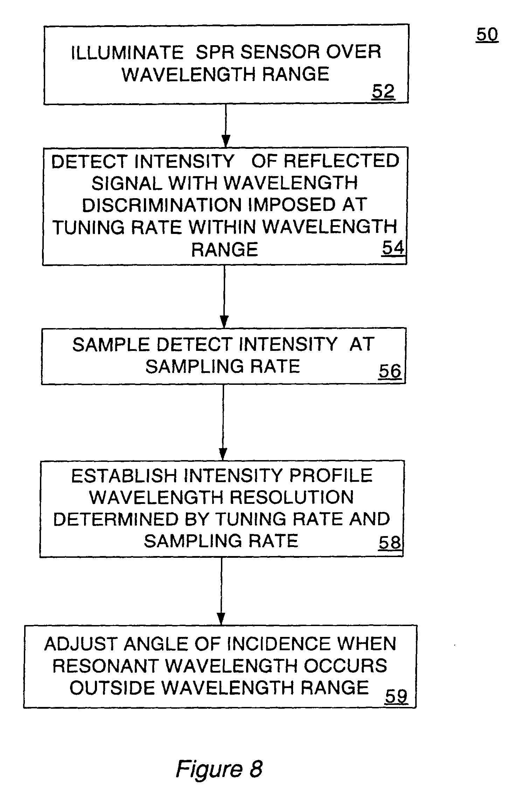

Figure 8 shows a measurement method 50 according to alternative embodiments of the present invention. The measurement method 50 includes illuminating the SPR sensor 10 over the wavelength range $\lambda_1$ - $\lambda_2$ with an incident optical signal, such as the signals $I_{INC}$, $IW_{INC}$ (step 52). In step 54 of the measurement method 50, the intensity of the reflected signal from the SPR sensor is detected with wavelength discrimination imposed, at a pre-established tuning rate within the wavelength range $\lambda_1$ - $\lambda_2$, on the incident signal or the reflected signal. Wavelength discrimination is imposed on the incident signal $I_{INC}$ by generating the incident signal with the tunable optical source 22. Alternatively, wavelength discrimination is imposed on the incident signal $I_{INC}$ via a tunable optical filter interposed between an optical source generating the incident signal and the SPR sensor 10. Wavelength discrimination is imposed on the reflected signal via the tunable optical filter 44 interposed between the SPR sensor 10 and the detector 28 detecting the intensity of the reflected signal from the SPR sensor 10.

Step 56 of the measurement method 50 includes sampling the detected intensity at a sampling rate. Step 58 includes establishing an intensity profile associated with the SPR sensor from the sampling of step 56, where the intensity profile has a wavelength resolution determined by the tuning rate $\gamma$ and the sampling rate. The measurement method 60 optionally comprises step 59, which includes adjusting the angle of incidence of the incident signal on the SPR sensor 10 when an identified resonant wavelength $\lambda_R$ associated with the SPR sensor 10 occurs outside the wavelength range $\lambda_1$ - $\lambda_2$, so that at an adjusted angle of incidence, the resonant wavelength $\lambda_R$ of the SPR sensor 10 falls within the designated wavelength range $\lambda_1$ - $\lambda_2$.

While an SPR sensor 10 has been included in the embodiments of the present invention, SPR sensors in these embodiments are meant to include resonant mirror transducers, or any other type of transducer providing reflected optical signals Ir having associated intensity profiles dependent on attributes of a sensing medium that are sensed by penetration of an evanescent wave into the sensing medium.

While the embodiments of the present invention have been illustrated in detail, it should be apparent that modifications and adaptations to these embodiments may occur to one skilled in the art without departing from the scope of the present invention as set forth in the following claims.

**Claims**

1. An optical system (20), comprising:

   an optical source (22, 42) for providing an incident signal for illuminating at least one SPR sensor (10);
   means for tuning the incident signal;
   a detector (28) for detecting the intensity of a reflected signal from the SPR sensor as the incident signal is tuned at a tuning rate over a designated wavelength range;
   a processing unit (30) for sampling the detected intensity at a sampling rate and establishing an intensity profile associated with the SPR sensor from the sampling of the detected intensity with a wavelength resolution based on the tuning rate and the sampling rate.

2. An optical system as claimed in claim 1, wherein the means for tuning the incident signal comprises the optical source.

3. An optical system as claimed in claim 2 wherein the tunable optical source includes a tunable laser.

4. An optical system as claimed in claim 2 wherein the tunable optical source includes a tunable optical filter cascaded with a broadband optical source.

5. An optical system as claimed in claim 1, wherein the means for tuning the incident signal comprises a tunable optical filter (44) interposed between the SPR sensor and the detector.

6. An optical system as claimed in any preceding claim, wherein the at least one SPR sensor has a series of targets for illumination by the incident signal.

7. An optical system as claimed in claim 6, wherein the detector has an array of detector elements for detecting the intensity of a series of signals reflected from said series of targets.

8. An optical system as claimed in any preceding claim, further comprising a focusing element interposed between the SPR sensor and the detector.

9. An optical system as claimed in any preceding claim wherein the processing unit is coupled to the detector.

10. An optical system as claimed in any preceding claim wherein the wavelength resolution of the established intensity profile is based on the ratio of the sampling rate and the tuning rate.

11. An optical system as claimed in any preceding claim wherein the processing unit identifies a resonant wavelength of the SPR sensor from the established intensity profile.

12. An optical system as claimed in claim 11 further comprising a rotation stage (25) for adjusting an angle of incidence of the incident signal when the resonant wavelength occurs outside the designated wavelength range so that at an adjusted angle of incidence, the resonant wavelength of the SPR sensor falls within the designated wavelength range.

13. An optical system as claimed in claim 11 or 12 wherein the processing unit identifies a shift in a resonant wavelength associated with a change in one or more attributes of the SPR sensor.

14. An optical system as claimed in claim 13 wherein the identified shift in resonant wavelength corresponds to a change in refractive index in a sensing medium of the SPR sensor.

15. An optical system as claimed in any preceding claim wherein the processing unit identifies a shift in the established intensity profile associated with a change in one or more attributes of the SPR sensor.

16. An optical system as claimed in claim 15 wherein the identified shift in the established intensity profile corresponds to a change in refractive index in a sensing medium of the SPR sensor.

17. An optical system as claimed in any preceding claim further comprising a collimating element (26) interposed between the optical source and the SPR sensor.

18. An optical system as claimed in any preceding claim further comprising an optical splitter (46) and a series of collimators interposed between the optical source and the SPR sensor.

19. A method, comprising:

illuminating an SPR sensor (10) over a wavelength range with an incident signal;
detecting the intensity of a reflected signal from the SPR sensor with wavelength discrimination imposed at a tuning rate and within the wavelength range, on at least one of the incident signal and the reflected signal;
sampling the detected intensity at a sampling rate; and
establishing an intensity profile associated with the SPR sensor from the sampling with a wavelength resolution determined by the tuning rate and the sampling rate.

20. A method as claimed in claim 19 wherein wavelength discrimination is imposed on the incident signal by generating the incident signal with a tunable optical source (22).

21. A method as claimed in claim 19 wherein wavelength discrimination is imposed on the incident signal via a tunable optical filter (44) interposed between an optical source generating the incident signal and the SPR sensor.

22. A method as claimed in claim 19 wherein wavelength discrimination is imposed on the reflected signal via a tunable optical filter interposed between the SPR sensor and a detector detecting the intensity of the reflected signal from the SPR sensor.

23. A method as claimed in any of claims 19 to 22 further including identifying a resonant wavelength of the SPR sensor from the established intensity profile.

24. A method as claimed in any of claims 19 to 23 further including identifying a shift in the established intensity profile associated with a change in one or more attributes of the SPR sensor.

25. A method as claimed in claim 24 wherein the identified shift in the established intensity profile corresponds to a change in refractive index in a sensing medium of the SPR sensor.

26. A method as claimed in claim 23 further including identifying a shift in the resonant wavelength associated with a change in one or more attributes of the SPR sensor.

27. A method as claimed in claim 26 wherein the identified shift in the resonant wavelength corresponds to a change in refractive index in a sensing medium of the SPR sensor.

28. A method as claimed in claim 23 further comprising adjusting an angle of incidence of the incident signal when the resonant wavelength occurs outside the designated wavelength range so that at an adjusted angle of incidence, the resonant wavelength of the SPR sensor falls within the designated wavelength range.

Figure 1

Figure 2

*Figure 3*

Figure 4

*Figure 5*

Figure 6

*Figure 7A*

*Figure 7B*

_50_

```
┌─────────────────────────────────┐
│   ILLUMINATE  SPR SENSOR OVER   │
│        WAVELENGTH RANGE         │
│                          52     │
└─────────────────────────────────┘
                 │
                 ▼
┌─────────────────────────────────┐
│  DETECT INTENSITY   OF REFLECTED │
│    SIGNAL WITH WAVELENGTH        │
│    DISCRIMINATION IMPOSED AT     │
│  TUNING RATE WITHIN WAVELENGTH   │
│          RANGE          54       │
└─────────────────────────────────┘
                 │
                 ▼
┌─────────────────────────────────┐
│    SAMPLE DETECT INTENSITY  AT   │
│        SAMPLING RATE             │
│                          56      │
└─────────────────────────────────┘
                 │
                 ▼
┌─────────────────────────────────┐
│   ESTABLISH INTENSITY PROFILE    │
│    WAVELENGTH RESOLUTION         │
│  DETERMINED BY TUNING RATE AND   │
│        SAMPLING RATE      58      │
└─────────────────────────────────┘
                 │
                 ▼
┌─────────────────────────────────┐
│  ADJUST ANGLE OF INCIDENCE WHEN  │
│  RESONANT WAVELENGTH OCCURS      │
│  OUTSIDE WAVELENGTH RANGE   59   │
└─────────────────────────────────┘
```

*Figure 8*